(19) Europäisches Patentamt

European Patent Office

Office européen des brevets

(11) Veröffentlichungsnummer: **0 316 263 B1**

(12) **EUROPÄISCHE PATENTSCHRIFT**

(45) Veröffentlichungstag der Patentschrift: **04.11.92**

(21) Anmeldenummer: **88730246.1**

(22) Anmeldetag: **09.11.88**

(51) Int. Cl.5: **B60C 27/10**

(54) **Verschluss für eine Reifenkette.**

(30) Priorität: **10.11.87 DE 3738575**

(43) Veröffentlichungstag der Anmeldung:
**17.05.89 Patentblatt 89/20**

(45) Bekanntmachung des Hinweises auf die
Patenterteilung:
**04.11.92 Patentblatt 92/45**

(84) Benannte Vertragsstaaten:
**AT CH DE FR GB IT LI**

(56) Entgegenhaltungen:
**DE-A- 2 710 057**
**DE-A- 3 129 907**
**DE-U- 8 325 734**
**GB-A- 2 084 087**

(73) Patentinhaber: **RUD-Kettenfabrik Rieger &
Dietz GmbH u. Co.
Friedensinsel
W-7080 Aalen 1(DE)**

(72) Erfinder: **Holzwarth, Dietmar Helmut
Vogelhofstrasse 51
W-7070 Schwäbisch Gmünd(DE)**

(74) Vertreter: **Böning, Manfred, Dr. Ing. et al
Patentanwälte Dipl.-Ing. Dieter Jander Dr.
Ing. Manfred Böning Leistikowstrasse 2
W-1000 Berlin 19(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen durch Anschlußösen mit einer äußeren Halterung verbundenen Verschluß für die Spannkette einer Reifenkette mit einer die Spannkette umschließenden Durchziehöffnung, die einen Führungskanal mit zwei im wesentlichen parallelen Seitenwänden bildet und an ihrem auslaßseitigen Rand zwei sich gegenüberliegende, zur Spannkettenarretierung dienende Widerlager für die Schultern des Buges jeweils eines Gliedes der Spannkette aufweist.

Aus dem DE-U 83 25 734.9 ist ein Verschluß der vorstehenden Art mit einem Spannkettenführungskanal bekannt, dessen sich gegenüberliegende längsseitige Innenflächen einen Abstand voneinander haben, der größer ist als die äußere Breite der Glieder der Spannkette. Bei diesem Verschluß sind die Stirnwände mit je einem Längsschlitz versehen, in den zu Arretierungszwecken ein Glied der Spannkette einführbar ist, dessen Längsebene parallel zu den Anschlußösen des Verschlusses orientiert ist. Der bekannte Verschluß ist vergleichsweise breit und dem Materialquerschnitt der Anschlußösen im Bereich der mit einem Längsschlitz versehenen Stirnwände des Führungskanals sind Grenzen gesetzt.

Aus der DE-A 31 29 907 ist außerdem ein Verschluß bekannt, der von einer Platte gebildet wird, deren Durchziehöffnung nach Art eines Schlüsselloches ausgebildet ist, das eine vergleichsweise große runde Bohrung und einen sich hieran anschließenden schmalen Arretierungsschlitz aufweist. Die lichte Weite der von der Bohrung gebildeten Durchziehöffnung für die Spannkette ist auch in diesem Fall größer als die äußere Breite der Glieder der Spannkette. Dies bedeutet, daß der zweite bekannte Verschluß ebenfalls verhältnismäßig breit und sein Einsatzbereich auf Fahrzeuge beschränkt ist, bei denen zwischen Fahrzeugrad und Radkasten relativ viel Platz vorhanden ist.

Der Erfindung liegt die Aufgabe zugrunde, einen Verschluß der in Betracht gezogenen Art so auszubilden, daß er sich bei stabiler Bauweise auch unter äußerst ungünstigen räumlichen Bedingungen im Radkastenbereich einsetzen läßt, d.h. daß er sich insbesondere für Reifenketten für Breitreifen moderner Fahrzeuge eignet. Diese Aufgabe wird erfindungsgemäß dadurch gelöst, daß der Abstand zwischen den Innenflächen der Seitenwände kleiner als die äußere Breite der Glieder der Spannkette ist und die Widerlager von einem Paar in den Seitenwänden angeordneter Rastkerben für die Schultern jeweils eines Gliedes der Spannkette gebildet werden.

Der erfindungsgemäße Verschluß bietet nicht nur den Vorteil, daß er schmal ist, sondern durch die Anordnung der Rastkerben an günstigen Stellen ist außerdem seine ausreichend große Steifigkeit gewährleistet.

Weitere Einzelheiten und Merkmale des erfindungsgemässen Verschlusses ergeben sich aus den Unteransprüchen, der nachfolgenden Beschreibung und der beigefügten Zeichnung. In der Zeichnung zeigen:

Fig. 1   schematisch die perspektivische Ansicht einer im Bereich ihrer äußeren Halterung mit einem Verschluß versehenen Reifenkette,

Fig. 2   teilweise im Schnitt die Seitenansicht des Verschlusses der Reifenkette gemäß Fig. 1 in einer ersten Durchziehstellung für die Spannkette,

Fig. 3   teilweise im Schnitt die Draufsicht auf den Verschluß gemäß Fig. 2,

Fig. 4   eine der Fig. 2 entsprechende Seitenansicht des Verschlusses in einer zweiten Durchziehstellung der Spannkette,

Fig. 5   die Draufsicht auf den Verschluß gemäß Fig. 4,

Fig. 6   die Seitenansicht des Verschlusses gemäß den Fig. 2 - 5 bei in die Rastkerben des Verschlusses eingerasteter Spannkette,

Fig. 7   teilweise im Schnitt die Draufsicht auf den Verschluß gemäß Fig. 6,

Fig. 8   eine der Fig. 7 entsprechende Draufsicht auf einen als Stanzteil ausgebildeten Verschluß,

Fig. 9   teilweise im Schnitt die Draufsicht auf ein bevorzugtes Ausführungsbeispiel und

Fig. 10  die Seitenansicht des Ausführungsbeispieles gemäß Fig. 9.

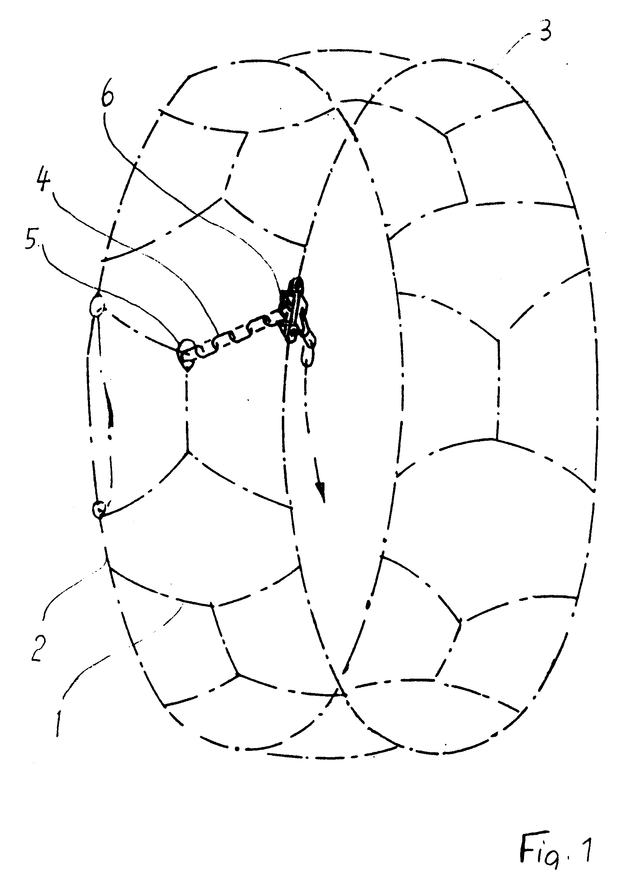

In Fig. 1 ist eine Reifenkette mit einem von Kettenstrangstücken 1 gebildeten Laufnetz dargestellt, das von einer inneren Halterung 2 und einer äußeren Halterung 3 gehalten wird. Zum Spannen der Reifenkette dient eine Spannkette 4, die eine nicht dargestellte Teilungsstelle im Bereich der inneren Halterung nach Art eines Flaschenzuges überbrückt und über die Lauffläche durch eine Öse 5 zu einem Verschluß 6 an der äußeren Halterung geführt ist.

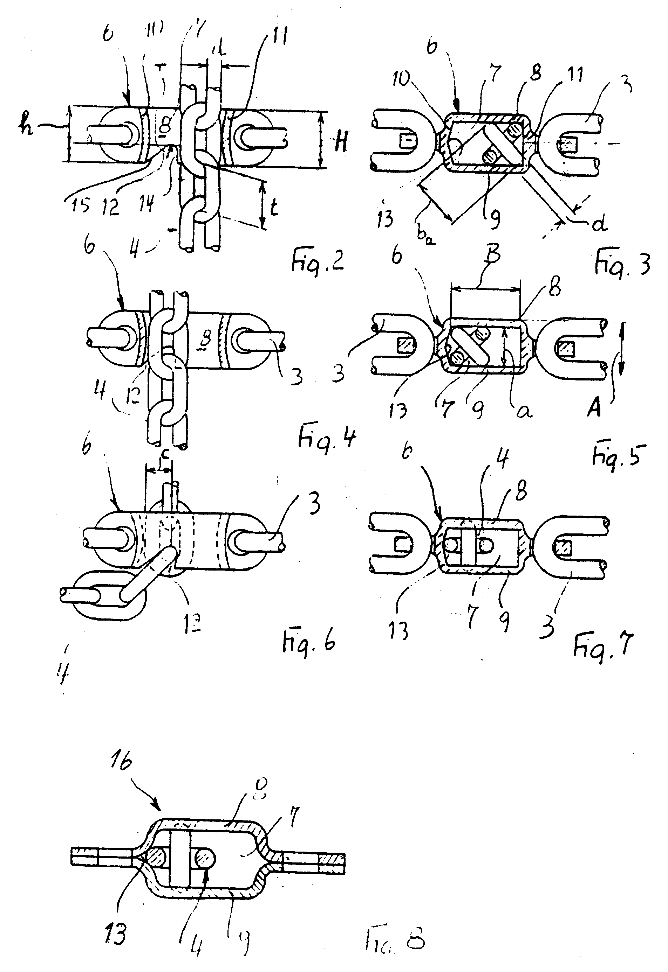

Einzelheiten des Verschlusses 6 ergeben sich aus den Figuren 2 - 7.

Der Verschluß 6 weist einen Führungskanal 7 auf, der eine Durchziehöffnung für die Spannkette 4 bildet. Der Führungskanal 7 hat zwei Seitenwände 8 und 9 sowie zwei Stirnwände 10 und 11. Der Abstand a zwischen den Innenflächen der Seitenwände 8 und 9 ist etwa gleiche der 0,7-bis 0,8-fachen äußeren Breite $b_a$ der Glieder der Spannkette 4, während der Abstand A zwischen den Außenflächen der Seitenwände 8 und 9 höchstens gleich der 1,2-fachen äußeren Breite $b_a$ der Spannkette 4 ist. Im Hinblick auf die Größe von a kann die Spannkette 4 den Führungskanal 7 nur dann passieren, wenn die Glieder der Spannkette 4 schräg zur Längsachse des Verschlusses 6 orientiert sind, wie dies in den Fig. 3 und 5 angedeutet ist.

Die in Spannrichtung der Spannkette vorn liegenden, d.h. in den Zeichnungen unteren Ränder der Seitenwände 8 und 9 sind mit Rastkerben 12 versehen. Während die Höhe H der Seitenwände 8 und 9 des Führungskanals 7 außerhalb des Bereiches der Rastkerben 12 größer ist als die Differenz aus der Teilung t und der Nenndicke d der Glieder der Spannkette 4, ist die Höhe h der Seitenwände im Bereich der Rastkerben 12 im wesentlichen gleich er halben Teilung der Glieder der Spannkette 4. Die Breite B des Führungskanals 7 ist etwa gleich der 1,5-fachen äußeren Breite $b_a$ der Glieder der Spannkette 4.

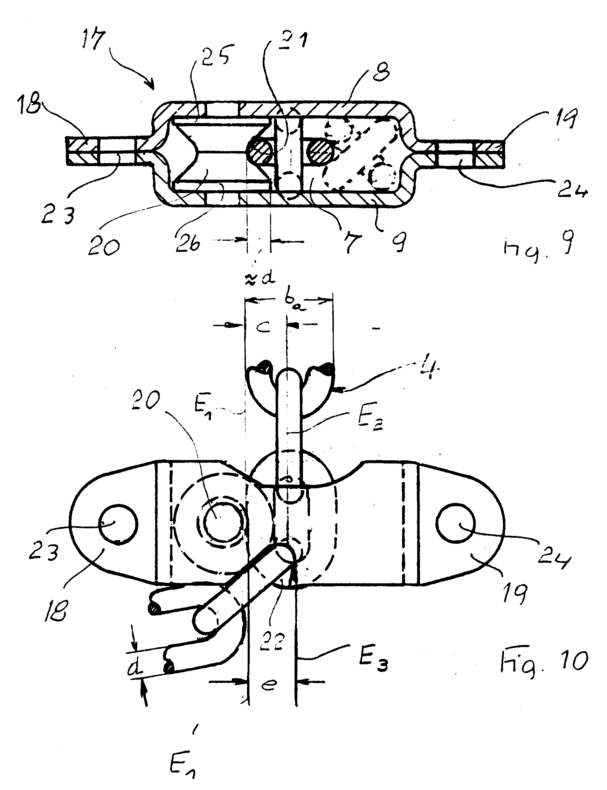

Die Stirnwände 10 und 11 des Führungskanals sind leicht gewölbt und die den Rastkerben 12 nächstgelegene Stirnwand 10 des Führungskanals 7 ist mit einer Justiermulde 13 versehen, die zur Justierung des Gliedes der Spannkette 4 dient, das in Spannrichtung betrachtet dem Glied folgt, das sich mit den Schultern seines Buges, wie in Fig. 6 und 7 angedeutet, in den Rastkerben 12 abstützt.

Die Figuren 2, 4 und 6 zeigen, daß die Rastkerben 12 in der Nähe der Stirnwand 10 des Führungskanals 7 angeordnet sind und daß die der Mitte des Führungskanals 7 zugewandte Begrenzungslinie 14 der Rastkerben 12 im wesentlichen parallel zur Längsachse des Führungskanals 7 verläuft, während die der Mitte des Führungskanals 7 abgewandte Begrenzungslinie 15 eine Schräglage zur Längsachse einnimmt.

Die Rastkerben 12 sind im Bereich ihres Grundes abgerundet, wobei der Krümmungsradius r der Rastkerben 12 mindestens gleich der halben und höchstens gleich der ganzen Nenndicke d der Glieder der Spannkette ist.

Der kleinste Abstand c zwischen einer durch den Scheitelpunkt des Grundes der Rastkerben 12 verlaufenden Ebene und der den Rastkerben nächstgelegenen Stirnwand 10 ist etwa gleich der halben äußeren Breite $b_a$ der Glieder der Spannkette 4.

Die beschriebene Bauweise des Verschlusses 6 bietet die Gewähr für eine einwandfreie Arretierung der gespannten Spannkette 4 in den Rastkerben 12. Die parallelen Wände 8 und 9 des Führungskanals erlauben es, die Spannkette 4 sowohl in der Nähe der Stirnwand 10 als auch in der Nähe der Stirnwand 11 durch den Führungskanal zu ziehen, um den Spannstrang 4 zu spannen. Dies erleichtert die Handhabung beim Spannen erheblich. Zur Verriegelung braucht die Spannkette 4 lediglich um einen gewissen Betrag im Bereich der Rastkerben 12 um ihre Längsachse geschwenkt zu werden. Die Schultern der Buge jeweils eines Gliedes der Spannkette 4 rasten dann in die Rastkerben 12 ein, wobei die Justiermulde zur Beibehaltung des eingerasteten Gliedes in der Spannstellung beiträgt.

In Fig. 8 ist ein als Stanzteil ausgebildeter, modifizierter Verschluß 16 dargestellt, der sich durch eine einfache Herstellbarkeit auszeichnet. Bei diesem Verschluß erhält man die Justiermulde 13 gewissermaßen automatisch.

Die Seitenwände 8 und 9 des in den Figuren 9 und 10 dargestellten Verschlusses 17 werden von zwei Stanzteilen gebildet, die im Gegensatz zum zuvor beschriebenen Ausführungsbeispiel nicht im Bereich ihrer Anschlußösen 18 und 19 durch Schweißung miteinander verbunden sind, sondern lediglich durch ein rotationssymmetrisches Einsatzstück 20 zusammengehalten werden. Das Einsatzstück 20 bildet hier die Justiermulde 21 für das Glied der Spannkette 4, welches in Spannrichtung betrachtet dem Glied folgt, das sich mit den Schultern seines Buges in den Rastkerben 22 abstützt. Die Tiefe der Justiermulde 21 ist ungefähr gleich der Nenndicke d der Glieder der Spannkette 4.

Auch in diesem Fall ist der Abstand c zwischen einer ersten in Richtung der senkrecht zur Verbindungslinie der Mittelpunkte der Bohrungen 23 und 24 der Anschlußösen 18,19 verlaufenden Hauptachse des Führungskanals 7 orientierten Ebene $E_1$, in die der Scheitelpunkt der Justiermulde 21 fällt, und einer zweiten zu dieser Ebene $E_1$ parallelen Ebene $E_2$, in der die Scheitelpunkte der Rastkerben 22 liegen, etwa gleich der halben äußeren Breite $b_a$ der Glieder der Spannkette 4. Als vorteilhaft erweist es sich, wenn darüber hinaus der Abstand e zwischen der Ebene $E_1$ und einer weiteren zu dieser Ebene parallelen Ebene $E_3$, die durch die am weitesten zur Mitte des Führungskanals 7 gelegenen Punkte der Rastkerben 22 verläuft, kleiner ist als die Summe aus dem Abstand c und der halben Nenndicke d der Glieder der Spannkette 4. Zum Zwecke der Arretierung der Spannkette 4 wird diese, in Fig. 10 betrachtet, schräg nach links unten gezogen. Dabei legt sich das zu arretierende Glied gegen Ringbunde 25 und 26 des Einsatzstückes 20 an, und seine Schultern kommen nach einer geringfügigen Schwenkbewegung gegen die Rundungen der Rastkerben 22 zur Anlage.

**Patentansprüche**

1. Durch Anschlußösen mit einer äußeren Halterung (3) verbundener Verschluß (6;16,17) für die Spannkette (4) einer Reifenkette mit einer die Spannkette (4) umschließenden Durchziehöffnung, die einen Führungskanal (7) mit zwei im wesentlichen parallelen Seitenwänden (8,9) bildet und an ihrem auslaßseitigen Rand zwei sich gegenüberliegende, zur Spannkettenarretierung dienende Widerlager für die Schultern des Buges jeweils eines Gliedes der Spannkette (4) aufweist, dadurch gekennzeichnet, daß der Abstand (a) zwischen den Innenflächen der Seitenwände (8,9) kleiner als die äußere Breite (b$_a$) der Glieder der Spannkette (4) ist und die Widerlager von einem Paar in den Seitenwänden (8,9) angeordneter Rastkerben (12,22) für die Schultern jeweils eines Gliedes der Spannkette (4) gebildet werden.

2. Verschluß nach Anspruch 1, dadurch gekennzeichnet, daß der Abstand (a) zwischen den Innenflächen der Seitenwände (8,9) etwa gleich der 0,7-bis 0,8-fachen äußeren Breite (b$_a$) der Glieder der Spannkette (4) ist.

3. Verschluß nach Anspruch 1 oder 2, dadurch gekennzeichnet, daß der Abstand (A) zwischen den Außenflächen der Seitenwände (8,9) höchstens gleich der 1,2-fachen äußeren Breite (b$_a$) der Glieder der Spannkette (4) ist.

4. Verschluß nach einem der Ansprüche 1 bis 3, dadurch gekennzeichnet, daß die Höhe (H) der Seitenwände (8,9) des Führungskanals (7) außerhalb des Bereiches der Rastkerben (12,22) größer ist als die Differenz aus der Teilung (t) und der Nenndicke (d) der Glieder der Spannkette (4).

5. Verschluß nach Anspruch 4, dadurch gekennzeichnet, daß die Höhe (H) der Seitenwände (8,9) außerhalb des Bereiches der Rastkerben (12,22) im wesentlichen gleich der Teilung (t) der Glieder der Spannkette (4) ist.

6. Verschluß nach einem der Ansprüche 1 bis 5, dadurch gekennzeichnet, daß die Höhe (h) der Seitenwände (8,9) des Führungskanals (7) im Bereich der Rastkerben (12,22) im wesentlichen gleich der halben Teilung (t) der Glieder der Spannkette (4) ist.

7. Verschluß nach einem der Ansprüche 1 bis 6, dadurch gekennzeichnet, daß die Breite (B) des Führungskanals (7) etwa gleich der 1,5-fachen äußeren Breite (b$_a$) der Glieder der Spannkette (4) ist.

8. Verschluß nach einem der Ansprüche 1 bis 7, dadurch gekennzeichnet, daß die Stirnwände (10,11) des Führungskanals (7) leicht gewölbt sind.

9. Verschluß nach einem der Ansprüche 1 bis 8, dadurch gekennzeichnet, daß die Rastkerben (12,22) in der Nähe einer der stirnseitigen Innenflächen des Führungskanals (7) angeordnet sind.

10. Verschluß nach einem der Ansprüche 1 bis 9, dadurch gekennzeichnet, daß die der Mitte des Führungskanals (7) zugewandte Begrenzungslinie (14) der Rastkerben (12,22) im wesentlichen parallel zur Längsachse des Führungskanals (7) verläuft.

11. Verschluß nach einem der Ansprüche 1 bis 10, dadurch gekennzeichnet, daß die der Mitte des Führungskanals (7) abgewandte Begrenzungslinie (15) der Rastkerben (12,22) schräg zur Längsachse des Führungskanals (7) verläuft.

12. Verschluß nach einem der Ansprüche 1 bis 11, dadurch gekennzeichnet, daß die Rastkerben (12,22) im Bereich ihres Grundes abgerundet sind.

13. Verschluß nach Anspruch 12, dadurch gekennzeichnet, daß der Krümmungsradius (r) der Abrundung der Rastkerben (12,22) mindestens gleich der halben und höchstens gleich der ganzen Nenndicke (d) der Glieder der Spannkette (4) ist.

14. Verschluß nach einem der Ansprüche 1 bis 13, dadurch gekennzeichnet, daß der Abstand (c) zwischen zwei durch den Scheitelpunkt des Grundes der Rastkerben (12,22) und dem am weitesten zur Mitte des Führungskanals (7) gelegenen Punkt der stirnseitigen Innenfläche des Führungskanals (7) in Richtung der Hauptachse des Führungskanals (7) verlaufenden parallelen Ebenen etwa gleich der halben äußeren Breite (b$_a$) der Glieder der Spannkette (4) ist.

15. Verschluß nach einem der Ansprüche 1 bis 14, dadurch gekennzeichnet, daß die den Rastkerben (12) nächstgelegene stirnseitige Innenfläche des Führungskanals (7) mit einer Justiermulde (13,21) für das Glied der Spannkette (4) versehen ist, das in Spannrichtung betrachtet dem Glied folgt, das sich mit den Schultern seines Buges in den Rastkerben (12,22) abstützt.

16. Verschluß nach einem der Ansprüche 1 bis 15, dadurch gekennzeichnet, daß die Justiermulde (21) von einem rotationssymmetrischen Einsatzstück (20) gebildet wird.

17. Verschluß nach Anspruch 16, dadurch gekennzeichnet, daß der größte Durchmesser (D) des Einsatzstückes (20) kleiner als die Höhe (H) der Seitenwände (8,9) des Führungskanals (7) ist.

18. Verschluß nach einem der Ansprüche 15 bis 17, dadurch gekennzeichnet, daß der Abstand (e) zwischen zwei parallelen, einerseits durch den Scheitelpunkt des Grundes der Justiermulde (21) und andererseits durch die am weitesten zur Mitte des Führungskanals (7) gelegenen Punkte der Rastkerben (22) in Richtung der Hauptachse des Führungskanals (7) verlaufenden Ebenen ($E_1$ und $E_3$) kleiner ist als die Summe aus der halben Nenndicke (d) der Glieder des Spannstranges (4) und dem Abstand (c) zwischen der vorgenannten durch den Scheitelpunkt des Grundes der Justiermulde (21) verlaufenden Ebene ($E_1$) und einer weiteren durch die Scheitelpunkte des Grundes der Rastkerben (22) verlaufenden parallelen Ebene ($E_2$) ist.

19. Verschluß nach einem der Ansprüche 16 bis 18, dadurch gekennzeichnet, daß das Einsatzstück (20) mit das Einführen des zu arretierenden Kettengliedes der Spannkette (4) in die Rastkerben (22) erleichternden Ringbunden (25,26) versehen ist.

## Claims

1. A fastener (6; 16, 17) for connection by attachment eyes to an exterior retaining part (3), for the tensioner chain (4) of a tyre chain with a draw-through opening surrounding the tensioner chain, which opening forms a guide passage (7) with two substantially parallel side walls (8, 9) and two abutments lying oppositely on their outlet-side edge and serving to arrest the tensioner chain, by the shoulders of the bend in each case of a link of the tensioner chain (4), characterised in that the spacing (a) between the inner surfaces of the side walls (8, 9) is less than the external width ($b_a$) of the links of the tensioner chain (4) and that the abutments are formed by a pair of detent notches (12, 22) arranged in the side walls (8, 9), for the shoulders in each case of a link of the tensioner chain.

2. A fastener according to Claim 1, characterised in that the spacing (a) between the inner faces of the side walls (8, 9) is equal to about 0.7 to 0.8 times the external width ($b_a$) of the links of the tensioner chain (4).

3. A fastener according to Claim 1 or 2, characterised in that the spacing (A) between the outer faces of the side walls (8, 9) is at most equal to 1.2 times the external width ($b_a$) of the links of the tensioner chain (4).

4. A fastener according to any one of Claims 1 to 3, characterised in that the height (H) of the side walls (8, 9) of the guide passage (7) outside the region of the detent notches (12, 22) is greater than the difference between the pitch (t) and the nominal thickness (d) of the links of the tensioner chain (4).

5. A fastener according to Claim 4, characterised in that the height (H) of the side walls (8, 9) outside the region of the detent notches (12, 22) is substantially equal to the pitch (t) of the links of the tensioner chain (4).

6. A fastener according to any one of Claims 1 to 5, characterised in that the height (h) of the side walls (8, 9) of the guide passage (7) in the region of the detent notches (12, 22) is substantially equal to half the pitch (t) of the links of the tensioner chain (4).

7. A fastener according to any one of Claims 1 to 6, characterised in that the width (B) of the guide passage (7), is approximately equal to 1.5 times the outer width ($b_a$) of the links of the tensioner chain (4).

8. A fastener according to any one of Claims 1 to 7, characterised in that the end walls (10, 11) of the guide passage (7) are slightly domed.

9. A fastener according to any one of Claims 1 to 8, characterised in that the detent notches (12, 22) are arranged in the vicinity of one of the end inner faces of the guide passage (7).

10. A fastener according to any one of Claims 1 to 9, characterised in that the defining line (14), facing the centre of the guide passage (7), of the detent notches (12, 22) extends substantially parallel to the longitudinal axis of the guide passage (7).

11. A fastener according to any one of Claims 1 to 10, characterised in that the defining line (15), facing away from the centre of the guide passage (7), of the detent notches (12, 22) extends obliquely of the longitudinal axis of the guide passage (7).

12. A fastener according to any one of Claims 1 to 11, characterised in that the detent notches (12, 22) are rounded off in the region of their bottoms.

**13.** A fastener according to Claim 12, characterised in that the radius of curvature (r) of the rounding of the detent notches (12, 22) is at least equal to half and at most equal to the whole nominal thickness (d) of the links of the tensioner chain (4).

**14.** A fastener according to any one of Claims 1 to 13, characterised in that the spacing (c) between two parallel planes passing through the apex point of the bottom of the detent notches (12, 22) and the point of the end inner face of the guide passage (7) situated furthest towards the middle of the guide passage (7), in the direction of the main axis of the guide passage (7), is approximately equal to half the outer width ($b_a$) of the links of the tensioner chain (4).

**15.** A fastener according to any one of Claims 1 to 14, characterised in that the end inner face nearest the detent notches (12), of the guide passage (7), is provided with an adjusting trough (13, 21) for the link of the tensioner chain (4) which, considered in the tensioning direction, follows the link which is supported with the shoulders of its bend in the detent notches (12, 22).

**16.** A fastener according to any one of Claims 1 to 15, characterised in that the adjusting trough (21) is formed by a rotationally symmetrical insert piece (20).

**17.** A fastener according to Claim 16, characterised in that the maximum diameter (D) of the insert piece (20) is smaller than the height (H) of the side walls (8, 9) of the guide passage (7).

**18.** A fastener according to any one of Claims 15 to 17, characterised in that the spacing (e) between two parallel planes ($E_1$ and $E_3$) passing on the one hand through the apex point of the bottom of the adjusting trough (21) and on the other hand through the points of the detent notches (22) placed furthest towards the middle of the guide passage (7), in the direction of the main axis of the guide passage (7) is less than the sum of half the nominal thickness (d) of the links of the tensioner length (4) and the spacing (c) between the above-mentioned plane ($E_1$), passing through the apex point of the bottom of the adjusting trough (21), and a further parallel plane ($E_2$) extending through the apex points of the bottom of the detent notches (22).

**19.** A fastener according to any of Claims 16 to 18, characterized in that the insert piece (20) is provided with annular collars (25, 26) which facilitate the introduction of the tensioner chain's (4) chain link to be arrested in the detent notches (22).

**Revendications**

**1.** Fermoir (6 ; 16,17) relié par des boucles de raccordement à un support extérieur (3) et destiné à la chaîne de tension (4) d'une chaîne antidérapante pour pneumatique, avec une ouverture d'enfilage, entourant la chaîne de tension (4), qui forme un canal de guidage (7) à deux parois latérales (8,9) pratiquement parallèles et qui présente, sur son bord du côté de sortie, deux appuis en vis-à-vis, servant à bloquer la chaîne de tension et destinés à des épaulements de la partie avant d'un maillon particulier de la chaîne de tension (4), **caractérisé** en ce que la distance (a) entre les faces intérieures des parois latérales (8,9) est inférieure à la largeur extérieure ($b_a$) des maillons de la chaîne de tension (4), et en ce que des appuis sont formés par une paire d'encoches de crantage (12,22), disposées dans les parois latérales (8,9) et destinées aux épaulements du maillon particulier de la chaîne de tension (4).

**2.** Fermoir selon la revendication 1, **caractérisé** en ce que la distance (a) entre les faces intérieures des parois latérales (8,9) est environ égale à 0,7 à 0,8 fois la largeur extérieure ($b_a$) des maillons de la chaîne de tension (4).

**3.** Fermoir selon la revendication 1 ou 2, **caractérisé** en ce que la distance (A) entre les faces extérieures des parois latérales (8,9) est au plus égale à 1,2 fois la largeur extérieure ($b_a$) des maillons de la chaîne de tension (4).

**4.** Fermoir selon l'une des revendications 1 à 3, **caractérisé** en ce que la hauteur (H) des parois latérales (8,9) du canal de guidage (7), en dehors de la région des encoches de crantage (12,22), est supérieure à la différence entre le pas (t) et l'épaisseur nominale (d) des maillons de la chaîne de tension (4).

**5.** Fermoir selon la revendication 4, **caractérisé** en ce que la hauteur (H) des parois latérales (8,9) en dehors de la région des encoches de crantage (12,22) est pratiquement égale au pas (t) des maillons de la chaîne de tension (4).

6. Fermoir selon l'une des revendications 1 à 5, **caractérisé** en ce que la hauteur (h) des parois latérales (8,9) du canal de guidage (7) dans la région des encoches de crantage (12,22) est pratiquement égale à la moitié du pas (t) des maillons de la chaîne de tension (4).

7. Fermoir selon l'une des revendications 1 à 6, **caractérisé** en ce que la largeur (B) du canal de guidage (7) est environ égale à 1,5 fois la largeur extérieure ($b_a$) des maillons de la chaîne de tension (4).

8. Fermoir selon l'une des revendications 1 à 7, **caractérisé** en ce que les parois terminales (10,11) du canal de guidage (7) sont un peu incurvées.

9. Fermoir selon l'une des revendications 1 à 8, **caractérisé** en ce que les encoches de crantage (12,22) sont disposées au voisinage d'une des faces intérieures terminales du canal de guidage (7).

10. Fermoir selon l'une des revendications 1 à 9, **caractérisé** en ce que la ligne de délimitation (14) des encoches de crantage (12,22) qui est proche du milieu du canal de guidage (7) s'étend pratiquement parallèlement à l'axe longitudinal du canal de guidage (7).

11. Fermoir selon l'une des revendications 1 à 10, **caractérisé** en ce que la ligne de délimitation (15) des encoches de crantage (12,22) qui est éloignée du milieu du canal de guidage (7) s'étend obliquement par rapport à l'axe longitudinal du canal de guidage (7).

12. Fermoir selon l'une des revendications 1 à 11, **caractérisé** en ce que les encoches de crantage (11,22) sont arrondies dans la région de leur fond.

13. Fermoir selon la revendication 12, **caractérisé** en ce que le rayon de courbure (r) de l'arrondi des encoches de crantage (12,22) est au moins égal à la moitié et au plus à la totalité de l'épaisseur nominale (d) des maillons de la chaîne de tension (4).

14. Fermoir selon l'une des revendications 1 à 13, **caractérisé** en ce que la distance (c) entre deux plans parallèles, s'étendant dans la direction de l'axe principal du canal de guidage (7) et passant respectivement par le sommet du fond des encoches de crantage (12,22) et par le point de la face intérieure terminale du canal de guidage (7) qui est le plus éloigné du milieu du canal de guidage (7), est environ égale à la moitié de la largeur extérieure ($b_a$) des maillons de la chaîne de tension (4).

15. Fermoir selon l'une des revendications 1 à 14, **caractérisé** en ce que la face intérieure terminale du canal de guidage (7) qui est la plus proche des encoches de crantage (12) est dotée d'un creux d'ajustage (13,21), destiné au maillon de la chaîne de tension (4) qui, vu dans le sens de tension, suit le maillon qui s'appuie par les épaulements de sa partie avant dans les encoches de crantage (12,22).

16. Fermoir selon l'une des revendications 1 à 15, **caractérisé** en ce que le creux d'ajustage (21) est formé par une pièce d'insertion (20) à symétrie de révolution.

17. Fermoir selon la revendication 16, **caractérisé** en ce que le diamètre maximal (D) de la pièce d'insertion (20) est inférieur à la hauteur (H) des parois latérales (8,9) du canal de guidage (7).

18. Fermoir selon l'une des revendications 15 à 17, **caractérisé** en ce que la distance (e) entre deux plans parallèles ($E_1$ et $E_3$), s'étendant dans la direction de l'axe principal du canal de guidage (7) et passant respectivement par le sommet du fond du creux d'ajustage (21) et par les points des encoches de crantage (22) qui sont les plus éloignés du milieu du canal de guidage (7), est inférieure à la somme de la moitié de l'épaisseur nominale (d) des maillons de la chaîne de tension (4) et de la distance (c) entre le plan ($E_1$) précité, passant par le sommet du fond du creux d'ajustage (21), et un autre plan parallèle ($E_2$), passant par les sommets du fond des encoches de crantage (22).

19. Fermoir selon l'une des revendications 16 à 18, **caractérisé** en ce que la pièce d'insertion (20) est dotée de collets annulaires (25,26) facilitant l'introduction, dans les encoches de crantage (22), du maillon de la chaîne de tension (4) à bloquer.

Fig. 1

Fig. 2

Fig. 3

Fig. 4

Fig. 5

Fig. 6

Fig. 7

Fig. 8

Fig. 9

Fig. 10